Europäisches Patentamt

European Patent Office

Office européen des brevets

(19)

(11) Numéro de publication: **0 264 600**
**B1**

## (12) FASCICULE DE BREVET EUROPEEN

(45) Date de publication du fascicule du brevet:
**27.12.90**

(51) Int. Cl.⁵: **B29D 30/60**

(21) Numéro de dépôt: **87113022.5**

(22) Date de dépôt: **05.09.87**

(54) Procédé de fabrication d'un pneumatique avec des produits caoutchouteux sur un support ferme, dispositif de pose selon un tel procédé, machine utilisant de tels dispositifs.

(30) Priorité: **17.09.86 FR 8613104**

(43) Date de publication de la demande:
**27.04.88 Bulletin 88/17**

(45) Mention de la délivrance du brevet:
**27.12.90 Bulletin 90/52**

(84) Etats contractants désignés:
**AT BE CH DE ES FR GB GR IT LI LU NL SE**

(56) Documents cités:
**DE-A- 1 729 555**
**DE-A- 3 405 931**
**FR-A- 2 091 307**
**FR-A- 2 183 199**
**FR-A- 2 301 379**
**GB-A- 1 048 241**
**US-A- 3 116 194**
**US-A- 3 223 572**
**US-A- 3 901 756**
**US-A- 4 240 863**
**US-A- 4 279 683**
**US-A- 4 299 789**

(73) Titulaire: **MICHELIN & CIE (Compagnie Générale des Etablissements Michelin) Société dite:, 4 rue du Terrail, F-63000 Clermont-Ferrand(FR)**

(72) Inventeur: **Laurent, Daniel, 23, avenue de la Plaine Fleurie, F-38240 Meylan(FR)**

(74) Mandataire: **Renaudie, Jacques et al, Michelin & Cie Service K. Brevets, F-63040 Clermont-Ferrand Cédex(FR)**

ACTORUM AG

**Description**

La présente invention se rapporte à la fabrication des pneumatiques. Plus particulièrement, elle concerne les procédés et appareillages de pose des produits caoutchouteux en vue de ladite fabrication.

Dans un pneumatique, on utilise de nombreux produits caoutchouteux de constitutions et de propriétés différentes, appelés en général "mélanges", préparés par mélangeage de différents constituants de base. La préparation initiale est effectuée grâce à des outils appelés "mélangeurs internes" dont on voit un exemple dans le brevet US 1 881 994. Ensuite, le mélange ainsi obtenu est travaillé sur des outils à cylindres et/ou des boudineuses (voir US 4 154 536) pour obtenir finalement, grâce à des cylindres et/ou des lames de dimensions et de formes adéquates, un produit semi-fini sous forme de feuilles de caoutchouc ou de bandelettes d'épaisseur faible, appelées produits plats, ou bien sous forme de profilés, prêts à être posés sur l'ébauche du pneumatique au cours de sa fabrication. Le brevet US 4 299 789 expose une façon d'obtenir un profilé de caoutchouc.

Les différents produits semi-finis ainsi fabriqués sont ensuite assemblés pour former une ébauche crue de pneumatique, en général sur un tambour de confection dont les brevets FR 1 543 925 et FR 1 518 250 donnent des exemples. Ce procédé de fabrication de pneumatiques utilisé classiquement dans l'industrie impose donc de fabriquer un grand nombre de produits plats ou profilés en caoutchouc différents, étant donné la grande diversité de structures et de dimensions des pneumatiques.

Une autre source de complications et d'insatisfactions d'un tel procédé réside dans la nécessité de faire subir des conformations aux produits en caoutchouc cru au cours de la confection du pneumatique. Celle-ci débute en général sur un tambour de confection cylindrique ou quasi-cylindrique. Par déformations successives, l'ébauche de pneumatique approche ensuite de sa forme finale. Certains de ces produits en caoutchouc doivent donc, à l'état cru, être capables de supporter des déformations importantes. A l'état cru, les produits en caoutchouc doivent donc jouir de propriétés mécaniques suffisantes pour subir les opérations de stockage, de manipulation et de pose sans se déformer de manière trop importante. Tous ces impératifs apportent des contraintes dans la formulation des mélanges en caoutchouc, contraintes qui ne sont dictées que par le processus de fabrication du pneumatique, et non par des caractéristiques d'usage de ce pneumatique.

Il est connu par le brevet US 1 328 006 d'utiliser un noyau rigide au lieu d'un tambour déformable comme support de l'ébauche du pneumatique au cours de sa confection. Cependant, l'application de produits semi-finis en caoutchouc cru sur une telle forme étant encore plus complexe que la pose de ces produits sur un tambour de confection, cette technique de fabrication a été totalement abandonnée.

Des procédés permettant de s'affranchir de la préparation de produits semi-finis en caoutchouc ont été décrits dans le domaine du rechapage des pneumatiques. Ainsi le brevet US 3 223 572 décrit une méthode de fabrication d'une bande de roulement pour le rechapage d'un pneumatique, consistant à enrouler de manière convenable un grand nombre de spires d'une bandelette de caoutchouc préalablement préparée indépendamment des formes et dimensions des bandes de roulement à reconstituer. Cependant, la précision de cette méthode est insuffisante car il est difficile de conférer à une telle bandelette une stabilité dimensionnelle suffisante, même par le secours des intercalaires. Le brevet FR 2 091 307 propose quant à lui de rechaper un pneumatique en disposant directement à la périphérie de la carcasse à rechaper une lame ayant le profil voulu pour la bande de roulement, et en extrudant du caoutchouc au travers de cette lame au moyen d'une extrudeuse, qui peut être une extrudeuse volumétrique, tout en faisant tourner le pneumatique d'un tour pour obtenir une bande de roulement complète. Cette méthode exige de réaliser une lame pour chaque profil de bande de roulement requis, tout comme lors de la réalisation de bandes de roulement sous forme de produits semi-finis.

Le but de la présente invention est de proposer un procédé de fabrication qui s'affranchisse de la nécessité de préparer de nombreux produits semi-finis comme c'est le cas dans le procédé de fabrication classique.

Un autre but de la présente invention consiste à concevoir un procédé de pose de produits caoutchouteux pour la fabrication de pneumatiques, qui assure une très grande précision de pose de ces produits.

La présente invention a encore pour but de proposer un dispositif utilisable pour la mise en oeuvre d'un tel procédé et une machine pour la mise en oeuvre d'un tel procédé.

Selon l'invention, le procédé de fabrication d'un pneumatique, consistant à, successivement et dans l'ordre requis par l'architecture dudit pneumatique, poser des produits caoutchouteux et des éléments de renforcement pour confectionner progressivement l'ébauche du pneumatique sur un support ferme, est caractérisé en ce que la pose de certains produits caoutchouteux au moins est effectuée au moyen d'au moins une extrudeuse volumétrique dont l'orifice de sortie est positionné par rapport audit support à l'endroit où le produit caoutchouteux doit être appliqué pour confectionner l'ébauche, la quantité de produit caoutchouteux posé étant réglée par l'extrusion d'un volume donné par l'extrudeuse volumétrique, en relation avec la rotation dudit support et le rayon de pose, le profil du produit caoutchouteux à réaliser étant obtenu par un déplacement sensiblement méridien dudit orifice par rapport à la surface de pose, en relation avec ladite rotation.

Les figures suivantes illustrent de manière non limitative une mise en oeuvre de l'invention ; elles permettent d'en bien comprendre le principe et d'en saisir tous les avantages :

La figure 1 montre un dispositif d'application du caoutchouc cru ;

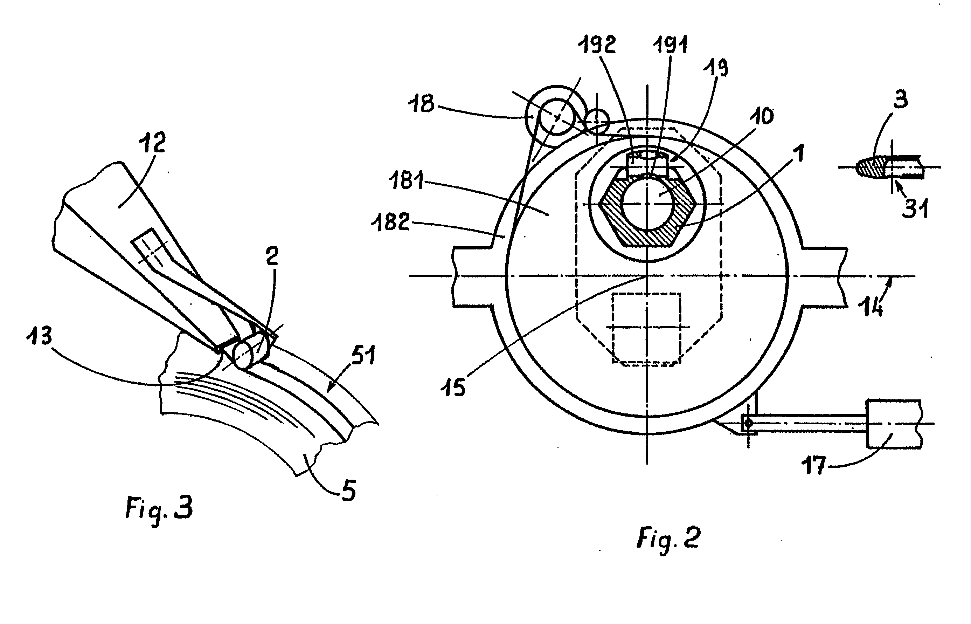

La figure 2 est une coupe selon II, II à la figure 1;

La figure 3 montre en détail l'orifice de sortie du caoutchouc ;

La figure 4 est une vue d'ensemble d'une machine permettant l'application de tous les produits caoutchouteux utilisés dans un pneumatique.

Selon l'invention, le procédé de pose des produits caoutchouteux est basée sur l'application d'un volume contrôlé dit "élémentaire" de caoutchouc sur un arc de cercle donné de rayon donné. Un produit en caoutchouc est caractérisé d'une part par une composition de caoutchouc et d'autre part par des dimensions géométriques. On obtient des constituants à la forme et au profil voulu en multipliant lesdits volumes contrôlés élémentaires circonférentiellement, transversalement et radialement.

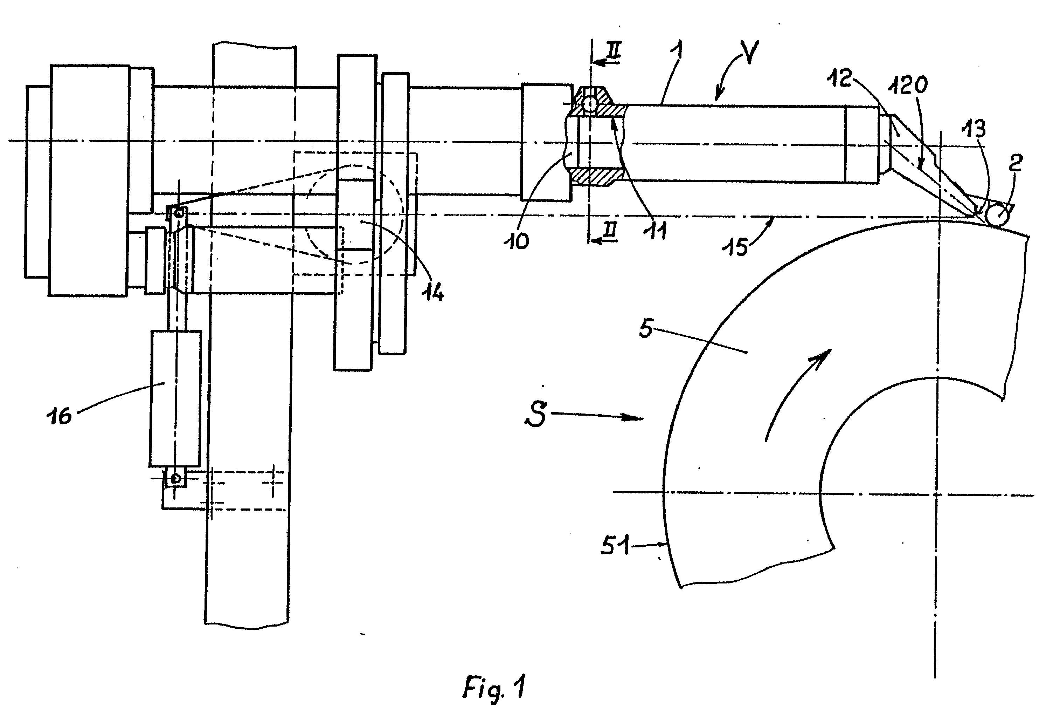

La figure 1 illustre un dispositif permettant la mise en oeuvre du procédé. Le dispositif comporte une extrudeuse volumétrique V disposée à la périphérie du support S sur lequel on va confectionner progressivement le pneumatique. Ladite extrudeuse V, dont l'ouverture de sortie délivre un volume donné de caoutchouc sur un rayon donné, pour un angle de rotation donné du support S sur lequel on confectionne l'ébauche de pneumatique, est remarquable en ce que ladite ouverture de sortie est un orifice 13 de petites dimensions, et en ce que ledit dispositif comporte des moyens propres à assurer un mouvement méridien dudit orifice 13 par rapport à la surface 51 sur laquelle on applique le caoutchouc. Ce mouvement méridien doit être tel qu'il permette l'approche et l'éloignement du support S par l'orifice 13 d'une part, et d'autre part la pose de caoutchouc à un endroit quelconque souhaité de la surface 51 sur laquelle on pose le caoutchouc. Cela nécessite un déplacement méridien à faible distance de la surface 51, ainsi qu'un éloignement par rapport au support lorsque la surface sur laquelle on pose est une couche de caoutchouc précédemment posée, par exemple au tour précédent du support S.

Dans ce procédé de pose et dans le dispositif qui le met en oeuvre, on n'utilise aucun couloir de pose guidant les produits caoutchouchteux vers la surface sur laquelle ils sont appliqués. Il n'y a donc aucun dispositif autonome entre l'orifice 13 d'extrusion et la surface sur laquelle on pose les produits caoutchouteux.

On peut prévoir un dispositif d'application tel qu'un galet comme décrit ci-dessous. Cependant, les mouvements d'un tel dispositif, considérés dans un plan méridien par rapport au pneumatique en cours de fabrication, ne sont pas commandés. Un tel dispositif d'application est mécaniquement relié à l'extrudeuse volumétrique, il constitue un accessoire de l'orifice 13 et il en suit les mouvements.

La pose de produits caoutchouteux est donc déterminée par l'association d'une extrusion volumétrique, au travers d'un orifice 13 de petites dimensions, sur une surface 51 ferme, et de mouvements relatifs appropriés entre ledit orifice 13 et ladite surface 51. On entend par surface ferme une surface ne subissant pas de déformation sous l'effet de l'effort d'application du caoutchouc, qui peut être important en particulier lorsque l'on utilise un dispositif d'application. On entend par "orifice 13 de petites dimensions" un orifice 13 dont les dimensions sont notablement plus petites que les dimensions de la section des produits en caoutchouc à poser, permettant l'extrusion sous forme de "bandelette" ou de "cordon" permettant, en plusieurs tours, d'obtenir la section finale souhaitée. Il est important de remarquer que ce n'est pas la surface de l'orifice de caoutchouc posé, mais bien le fait d'extruder un volume donné pour un angle de rotation donné et un rayon donné du support S. Dans la réalisation décrite, cet orifice 13 a la forme d'une fente. Il convient de choisir un orifice le plus petit possible pour obtenir une bonne définition dans la réalisation des produits en caoutchouc, compatible avec la cadence de travail souhaitée, et une forme compatible avec la réalisation desdits produits. Le volume extrudé se dépose bien entendu sur une certaine largeur conditionnée dans une certaine mesure par la longueur de la fente constituant l'orifice 13. Grâce à cette technique de pose, le départ de la pose et la fin de la pose des produits caoutchouteux sont très progressifs et ne concernent que des volumes de caoutchouc négligeables au regard du volume total du pneumatique. Il en résulte une régularité circonférentielle telle que les calages de départ de pose des différents produits sont inutiles, contrairement aux confections usuelles de pneumatiques. En d'autres mots, il est possible de commencer la pose quelle que soit la position (en rotation) du support S.

On utilise donc le principe de l'extrusion volumétrique, c'est-à-dire à volume contrôlé, afin de pouvoir poser des quantités précises de caoutchouc. On extrude juste à l'endroit où le caoutchouc doit être posé pour constituer le pneumatique, ce qui assure une grande précision dans la confection du pneumatique tout en s'affranchissant dans une très large mesure des propriétés de résistance mécanique du caoutchouc à l'état non vulcanisé. Cela ouvre le voie à l'utilisation de mélanges différents de ceux utilisés jusqu'à présent en fabrication de pneumatiques puisque ces mélanges ne sont pas sollicités mécaniquement de par le procédé de pose utilisé.

Le support S est de préférence un noyau 5 rigide démontable permettant de définir avec grande précision la forme de la surface intérieure du pneumatique. Dans ce cas, il est fort avantageux d'utiliser un moule tel que décrit dans la demande de brevet FR 86/06158, le noyau rigide 5 étant utilisé comme support de l'ébauche de pneu matique pendant toute la confection, puis constituant une partie du moule au cours de la vulcanisation subséquente. Cela permet de lutter très efficacement contre tout mouvement de caoutchouc cru en évitant toute conformation au cours de la fabrication du pneumatique.

L'extrudeuse volumétrique V est ici constituée par une seringue 1 comportant un piston 10 coulissant dans un cylindre 11, prolongée par une buse 12 se terminant par une fente constituant l'orifice 13 de sortie de l'extrudeuse volumétrique.

Il faut conférer à ladite extrudeuse volumétrique les mouvements voulus par rapport au noyau 5 rigide pour que l'orifice 13 puisse se rapprocher et s'éloigner de la surface 51 du noyau 5 d'une part, et pour que l'orifice 13 puisse se déplacer transversalement le long de ladite surface 51. En combinant ces déplacements avec la rotation du noyau 5 lui-même, l'orifice 13 peut ainsi balayer la totalité de la surface du noyau.

Une voie de réalisation de ces mouvements consiste à faire basculer l'extrudeuse volumétrique autour d'un axe 14 de basculement éloigné de l'orifice 13 et disposé par rapport au noyau 5 de manière telle que ledit orifice 13 décrive autour dudit axe 14 de basculement une trajectoire qui coupe la surface 51 sur laquelle on applique le caoutchouc. Cela permet le rapprochement et l'éloignement de l'orifice 13 par rapport à la surface 51 de pose, ainsi que le déplacement le long de ladite surface dans la zone du flanc du futur pneumatique. Il faut encore conférer à l'extrudeuse V un mouvement de translation le long dudit axe 14 de basculement, et enfin, permettre la rotation de l'orifice 13 autour d'un axe 15 passant par le centre de celui-ci et perpendiculaire à l'axe 14 de basculement. Les axes 14 et 15 sont de préférence sécants. Afin de faciliter la programmation des mouvements, l'axe 14 de basculement est ici parallèle à l'axe de rotation du pneumatique. La seringue 1 est orientée de manière quelconque par rapport à l'axe 14 de basculement, pourvu que l'orifice 13 puisse atteindre la surface 51 de pose du caoutchouc partout où il est nécessaire d'en poser. De préférence, l'orifice 13 approche la surface de pose 51 selon une trajectoire sensiblement perpendiculaire à la surface 51, et la direction d'extrusion du caoutchouc, visualisée par l'orientation de la buse 12, forme un angle aigu par rapport à ladite surface 51, compte tenu du sens de rotation du noyau 5 pendant la pose de caoutchouc (représenté par une flèche sur le noyau 5).

Afin de pouvoir assurer une grande précision dans le positionnement de l'orifice 13, les moyens de commande des différents mouvements du dispositif d'extrusion exposés ci-dessus sont préférentiellement réalisés à partir de moteurs électriques asservis en position. Ainsi, le vérin de basculement 16 comporte un tel moteur et un système "vis-écrou". La translation le long de l'axe 14 est commandée par un vérin 17 similaire. Enfin, la rotation de l'orifice 13 sur lui-même est assurée par le moteur 18 commandant la rotation de la couronne 181 portant l'extrudeuse volumétrique V, et mobile en rotation par rapport à un anneau 182 solidaire de l'axe 14.

Afin de permettre à l'orifice 13 d'atteindre la zone des bourrelets du pneumatique, l'axe 120 de la buse 12 est incliné par rapport à la seringue 1 de sorte que ledit orifice 13 est excentré par rapport à l'axe de ladite seringue 1.

Les figures illustrent une forme d'exécution préférentielle de l'extrudeuse V, en ce qu'elle comporte des moyens d'application pour favoriser l'adhésion du caoutchouc cru à la surface 51 sur laquelle on le pose. Ainsi on peut avantageusement disposer un galet 2 rotatif fixé près dudit orifice 13. Dans certains cas, ce galet 2 comporte un degré de liberté de basculement autour d'un axe perpendiculaire à son axe de rotation, sensiblement parallèle à la surface 51 sur laquelle on pose le caoutchouc. Cette disposition permet de ne pas commander la rotation de l'orifice sur lui-même, lorsque la surface sur laquelle on pose le caoutchouc ne s'incline que faiblement par rapport à son orientation moyenne. Par exemple, on peut poser une bande de roulement en ne commandant que le basculement autour de l'axe 14 et la translation le long du même axe 14.

Dans l'exemple décrit, la cylindrée de la seringue 1 est supérieure ou égale au volume de produit caoutchouteux à poser pour la confection d'un pneumatique. On entend par là qu'elle contient le caoutchouc nécessaire pour poser le produit considéré dans le cas où l'on fabrique le plus grand pneumatique d'une série donnée.

Pour l'alimentation en caoutchouc de la seringue 1, on a prévu une ouverture d'alimentation 19 aménagée dans la paroi du cylindre 11 juste devant le piston 10 lorsque celui-ci se trouve en position de recul maximum. Cette ouverture d'alimentation 19 est constituée par un passage 191 orienté radialement par rapport au cylindre 11, prolongé par un embout 192 orienté tangentiellement, parellèlement à l'axe 14, destiné à recevoir un nez 3 adapté à délivrer le caoutchouc acheminé par une tuyauterie. Le nez 3 et l'embout 192 sont donc conçus comme pièces mâle et femelle. Le nez comporte un orifice 31 orienté de manière à permettre d'écoulement du caoutchouc au travers du passage 191. Grâce aux moyens de commande des mouvements de basculement et de translation de l'extrudeuse volumétrique V, l'orifice de remplissage 19 de celle-ci accoste le nez 3. Le caoutchouc est propulsé dans la seringue jusqu'à ce qu'une sonde de pression judicieusement disposée dans la buse 12 détecte la fin du remplissage.

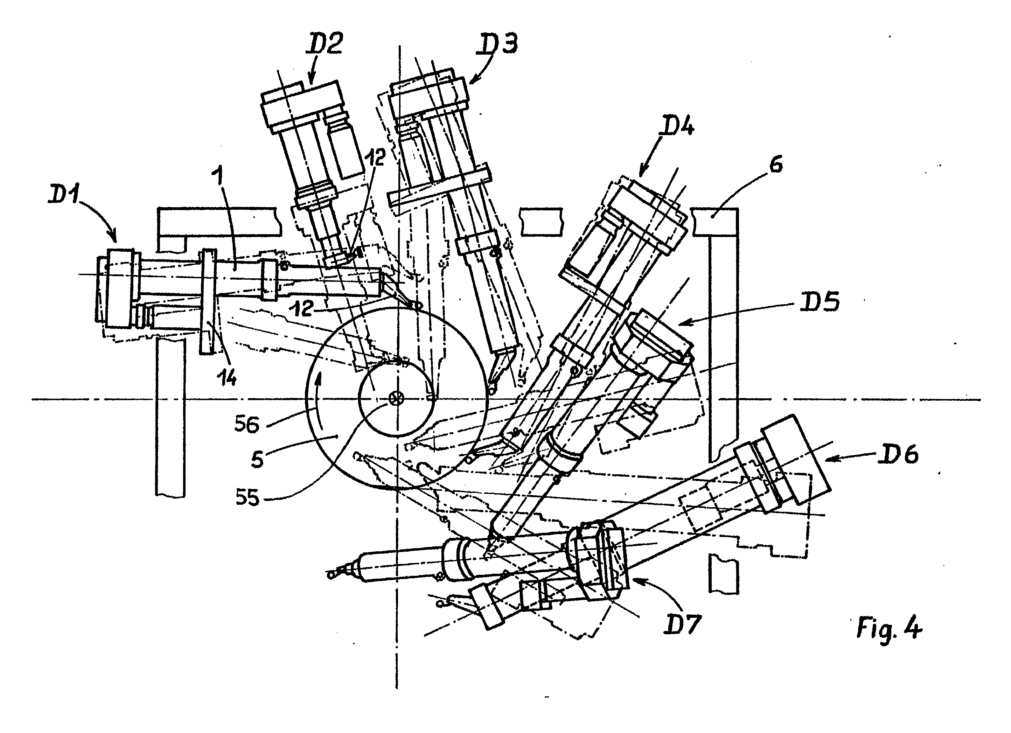

La figure 4 illustre une machine de pose des produits en caouthouc. Le fonctionnement apparait très clairement à la simple consultation de la figure. La machine comporte un portique 6 (représenté partiellement pour ne pas masquer les éléments essentiels de la machine) encadrant un noyau 5 rigide démontable sur lequel on confectionne le pneumatique, des moyens d'insertion et d'extraction du noyau 5 (le repère 55 symbolisant un mouvement dans la direction de l'axe du noyau 5) et des moyens de commande en rotation dudit noyau 5 (symbolisés par la flèche 56). La machine comporte, accrochés au portique 6, plusieurs dispositifs D1 à D7 d'application de produits caoutchouteux tels que décrits ci-dessus. On a prévu un dispositif de ce genre par type de caoutchouc à poser (c'est-à-dire composition demélange). Pour des questions de gain de temps de pose, on peut parfois être conduit à utiliser plus d'un dispositif par type de caoutchouc.

Le dispositif D1 assure la pose du revêtement intérieur du pneumatique ; il est représenté en traits continus en position de pose de caoutchouc dans la zone du sommet du futur pneumatique ; la position représentée en traits mixtes, buse 12 relevée, correspond à une position non active, ou à la position que prend la seringue 1 pendant l'alimentation en caoutchouc ; la position représentée en traits mixtes, de manière partielle et en dessous de la représentation en traits continus, correspond à la pose de caoutchouc dans la zone des futurs bourrelets. On comprend que pour atteindre cette zone, il a fallu utiliser les trois mouvements possibles : translation le long de l'axe 14 de basculement, basculement autour dudit axe 14 et rotation de la seringue sur elle-même.

Le dispositif D2 assure la pose d'un produit caoutchouteux au voisinage d'une tringle. La buse 12 est orientée dans un plan perpendiculaire à l'axe de la seringue. Ce dispositif D2 comporte une variante de réalisation des mouvements de la seringue. Au lieu d'une translation parallèle à l'axe 14, c'est une translation perpendiculaire à l'axe 14 qui, combinée avec le basculement autour de même axe 14, permet de conférer à la seringue les mouvements voulus.

La machine décrite est utilisée de préférence en association avec les moyens de fabrication de carcasses et de ceintures de pneumatiques décrits dans les damandes de brevets EP 87/105841 et EP 87/107547. Une manière particulièrement avantageuse deposer la couche de caoutchouc favorisant l'adhésion des fils de renforcement, décrite dans ces deux demandes de brevets consiste à utiliser un dispositif de pose tel que D3 pour la carcasse et D4 pour la ceinture.

Les dispositifs D5, D6 et D7 assurent respectivement la pose de caoutchouc au voisinage de la tringle, pour constituer la bande de roulement et pour constituer les flancs. On utilise de préférence deux dispositifs D2, D5 et D7, un seul ayant été représenté dans chaque cas.

Ainsi, grâce aux moyens décrits, il est possible d'assurer la pose des produits caoutchouteux utilisés pour construire un pneumatique de manière à la fois très précise en très économique. Les dispositifs d'application du caoutchouc utilisés dans la machine décrite sont répartis tous autour du noyau 5, qui peut ainsi être atteint par chacun d'eux sans déplacement dans le sens de son axe. De préférence, ils doivent être disposés de manière à ce que plusieurs d'entre eux puissent fonctionner simultanément. Il est possible d'accrocher au même portique 6 une machine de fabrication d'un renforcement du genre de celle décrite dans la demande de brevet EP 87/107547 et de réaliser la ceinture pendant le fonctionnement de certains des dispositifs D1 à D7. Toutes ces latitudes de fonctionnement de la machine sont clairement à la portée de l'homme du métier.

Grâce au procédé et au dispositif selon l'invention, non seulement il est possible de réaliser toutes les variations d'épaisseur de caoutchouc transversalement, ce qui est classique en confection de pneumatique avec des produits dits "profilés", mais en plus, il est possible de contrôler une variation d'épaisseur des produits selon la position angulaire dans le futur pneumatique, ce qui apporte une latitude supplémentaire dans la conception du pneumatique et permet notamment de poser le caoutchouc des bandes de roulement de sculpture agressive dans une configuration plus proche de la disposition finale, ce qui diminue les mouvements de caoutchouc au moulage. Il est possible de poser le caoutchouc de manière discontinue ou bien encore de le poser sur un arc de cercle seulement.

## Revendications

1. Procédé de fabrication d'un pneumatique, consistant à successivement et dans l'ordre requis par l'architecture dudit pneumatique, poser des produits caoutchouteux et des éléments de renforcement pour confectionner progressivement l'ébauche du pneumatique sur un support ferme, caractérisé en ce que la pose de certains produits caoutchouteux au moins est effectuée au moyen d'au moins une extrudeuse volumétrique dont l'orifice de sortie est positionné par rapport audit support à l'endroit où le produit caoutchouteux doit être appliqué pour confectionner l'ébauche, la quantité de produit caoutchouteux posé étant réglée par l'extrusion d'un volume donné par l'extrudeuse volumétrique, en relation avec la rotation dudit support et le rayon de pose, le profil du produit caoutchouteux à réaliser étant obtenu par un déplacement sensiblement méridien dudit orifice par rapport à la surface de pose, en relation avec ladite rotation.

2. Procédé selon la revendication 1, caractérisé en ce que ledit support est un noyau rigide démontable définissant la forme de la surface intérieure dudit pneumatique, supportant l'ébauche du pneumatique pendant la totalité de sa confection.

3. Procédé selon la revendication 2, caractérisé en ce que ledit noyau supporte le pneumatique au cours de la vulcanisation subséquente.

4. Dispositif assurant la pose de produits caoutchouteux en fabrication de pneumatique, du type comportant une extrudeuse volumétrique dont l'ouverture de sortie délivre un volume donné de caoutchouc pour un rayon donné et un angle de rotation donné du support S sur lequel on confectionne l'ébauche de pneumatique, caractérisé en ce que ladite ouverture de sortie est un orifice de petites dimensions, et en ce que ledit dispositif comporte des moyens propres à assurer un mouvement méridien dudit orifice par rapport à la surface sur laquelle on applique le caoutchouc.

5. Dispositif selon la revendication 4, caractérisé en ce ladite extrudeuse volumétrique est essentiellement constituée par une seringue comportant un piston coulissant dans un cylindre, prolongé du côté d'extrusion du caoutchouc par une buse terminée par ledit orifice.

6. Dispositif selon l'une des revendications 4 ou 5, caractérisé en ce qu'il comporte un galet rotatif d'application du caoutchouc fixé près dudit orifice.

7. Dispositif selon la revendication 6, caractérisé en ce que ledit galet comporte un degré de liberté de basculement autour d'un axe perpendiculaire à son axe de rotation.

8. Dispositif selon l'une des revendications 4 à 7, caractérisé en ce que les moyens propres à assurer un mouvement relatif comportent
- un axe de basculement autour duquel ladite extrudeuse volumétrique est disposée, ledit axe de basculement étant éloigné dudit orifice et disposé par rapport audit support de manière telle que ledit orifice décrive autour dudit axe de basculement une trajectoire qui coupe ladite surface sur laquelle on applique le caoutchouc,
- des moyens de commande du basculement de ladite extrudeuse,
- des moyens de commande en translation de ladite extrudeuse le long dudit axe de basculement.

9. Dispositif selon l'une des revendications 4 à 7, caractérisé en ce que les moyens propres à assurer un mouvement relatif comportent
- un axe de basculement autour duquel ladite extrudeuse volumétrique est disposée, ledit axe de basculement étant éloigné dudit orifice et disposé par rapport audit support de manière telle que ledit orifice décrive autour dudit axe de basculement une trajectoire qui coupe ladite surface sur laquelle on applique le caoutchouc,
- des moyens de commande du basculement de ladite extrudeuse,
- des moyens de commande en translation de ladite extrudeuse dans un sens perpendiculaire audit axe de basculement.

10. Dispositif selon la revendication 8 ou 9, caractérisé en ce qu'il comporte des moyens propres à assurer la rotation dudit orifice sur lui-même.

11. Dispositif selon l'une des revendications 5 à 10, caractérisé en ce que ledit orifice est excentré par rapport à l'axe du cylindre de la seringue.

12. Dispositif selon l'une des revendications 5 à 11, caractérisé en ce que la cylindrée utile de ladite seringue est supérieure ou égale au volume de produit caoutchouteux à poser pour la confection d'un pneumatique.

13. Dispositif selon l'une des revendications 5 à 12, caractérisé en ce que ladite seringue comporte une ouverture d'alimentation en caoutchouc aménagé dans la paroi du cylindre juste devant le piston lorsque celui-ci se trouve en position de recul maximum, ladite ouverture d'alimentation débouchant sur un embout destiné à recevoir un nez adapté à délivrer le caoutchouc.

14. Machine assurant la pose des produits caoutchouteux sur l'ébauche d'un pneumatique en cours de construction, caractérisée en ce qu'elle comporte
- un portique encadrant un noyau rigide démontable sur lequel on construit le pneumatique,
- des moyens d'insertion et d'extraction dudit noyau rigide à l'intérieur de et hors dudit portique,
- des moyens de commande en rotation dudit noyau rigide,
- au moins un dispositif de pose de produits caoutchouteux selon l'une des revendications 4 à 13 fixés audit portique.

15. Machine selon la revendication 14, caractérisée en ce qu'il y a au moins un dispositif par type de caoutchouc à poser.

16. Machine selon l'une des revendications 14 ou 15, caractérisée en ce que lesdits dispositifs d'applications sont disposés sur ledit portique de manière telle que plusieurs d'entre eux puissent appliquer du caoutchouc simultanément sur l'ébauche de pneumatique.

**Patentansprüche**

1. Verfahren zur Herstellung eines Luftreifens, bestehend aus dem aufeinanderfolgenden Aufbringen kautschukartiger Produkte und Verstärkungselemente in der vom Luftreifenaufbau bestimmten Reihenfolge, um auf einem geschlossenen Träger fortschreitend einen Luftreifen aufzubauen, dadurch gekennzeichnet, daß zumindest das Aufbringen gewisser kautschukartiger Produkte mittels zumindest eines volumetrischen Extruders erfolgt, dessen Ausgangsöffnung bezüglich des Trägers an der Stelle angeordnet ist, an der das kautschukartige Produkt aufgebracht werden muß, um den Rohling zu bilden, wobei die Menge des aufgebrachten kautschukartigen Produktes durch das Extrudieren eines vom volumetrischen Extruder vorgegebenen Volumens im Zusammenhang mit der Drehung des Trägers und dem Aufbringungsradius geregelt wird, wobei das Profil des herzustellenden Kautschukproduktes durch eine im wesentlichen in meridianer Richtung erfolgende Verschiebung der Öffnung bezüglich der Aufbringungsoberfläche in Verbindung mit der Drehung gebildet wird.

2. Verfahren nach Anspruch 1, dadurch gekennzeichnet, daß der Träger ein abnehmbarer steifer Kern ist, der die Form der Innenoberfläche des Reifens definiert und den Luftreifenrohling während der gesamten Herstellung trägt.

3. Verfahren nach Anspruch 2, dadurch gekennzeichnet, daß der Träger den Luftreifen während seiner anschließenden Vulkanisierung trägt.

4. Vorrichtung, die das Aufbringen kautschukartiger Produkte während der Herstellung eines Luftreifens sichert, von der Art, die einen volumetrischen Extruder umfaßt, dessen Ausgangsöffnung ein gegebenes Kautschukvolumen bei einem gegebenen Radius und einem gegebenen Drehwinkel des Trägers S auf dem der Luftreifenrohling gebildet wird, abgibt, dadurch gekennzeichnet, daß die Ausgangsöffnung eine Öffnung mit kleinen Abmessungen ist und dadurch, daß die Vorrichtung Mittel umfaßt, die der Öffnung eine Bewegung in meridianer Richtung bezüglich der Oberfläche, auf der der Kautschuk aufgebracht wird, verleihen.

5. Vorrichtung nach Anspruch 4, dadurch gekennzeichnet, daß der volumetrische Extruder im wesentlichen aus einer Spritze besteht, die einen in einem Zylinder gleitenden Kolben aufweist und auf der Ausgangsseite des Kautschuks durch eine Düse verlängert ist, die in der Öffnung endet.

6. Vorrichtung nach einem der Ansprüche 4 oder 5, dadurch gekennzeichnet, daß sie eine Drehrolle zum Andrücken des Kautschuks, nahe der Öffnung befestigt, aufweist.

7. Vorrichtung nach Anspruch 6, dadurch gekennzeichnet, daß die Rolle in einem gewissen Ausmaß um eine Achse schwenken kann, die rechtwinkelig auf ihre Drehachse verläuft.

8. Vorrichtung nach einem der Ansprüche 4 bis 7, dadurch gekennzeichnet, daß die Mittel, die eine Relativbewegung sichern, umfassen:
    – eine Schwenkachse, um die herum der volumetrische Extruder angeordnet ist, wobei die Schwenkachse von der Öffnung entfernt ist und bezüglich des Trägers so angeordnet ist, daß die Öffnung um die Schwenkachse eine Bahn beschreibt, die die Oberfläche, auf die der Kautschuk aufgebracht wird, schneidet,

— Antriebsmittel zum Verschwenken des Extruders,

— Antriebsmittel, um den Extruder entlang der Schwenkachse zu verschieben.

9. Vorrichtung nach einem der Ansprüche 4 bis 7, dadurch gekennzeichnet, daß die Mittel die eine Relativbewegung sichern, umfassen:

— eine Schwenkachse, um die herum der volumetrische Extruder angeordnet ist, wobei die Schwenkachse von der Öffnung entfernt ist und bezüglich des Trägers so angeordnet ist, daß die Öffnung um die Schwenkachse eine Bahn beschreibt, die die Oberfläche, auf die der Kautschuk aufgebracht wird, schneidet,

— Antriebsmittel zum Verschwenken des Extruders,

— Antriebsmittel, um den Extruder in einer Richtung rechtwinkelig auf die Schwenkachse zu verschieben.

10. Vorrichtung nach einem der Ansprüche 8 oder 9, dadurch gekennzeichnet, daß er Mittel aufweist, die die Drehung der Öffnung um sich selbst sichern.

11. Vorrichtung nach einem der Ansprüche 5 bis 10, dadurch gekennzeichnet, daß die Öffnung bezüglich der Zylinderachse der Spritze exzentrisch angeordnet ist.

12. Vorrichtung nach einem der Ansprüche 5 bis 11, dadurch gekennzeichnet, daß das nutzbare Zylindervolumen der Spritze größer oder gleich ist dem Volumen des bei der Herstellung eines Luftreifens aufzubringenden kautschukartigen Produktes.

13. Vorrichtung nach einem der Ansprüche 5 bis 12, dadurch gekennzeichnet, daß die Spritze eine Zufuhröffnung für den Kautschuk im Zylindermantel aufweist, die unmittelbar vor dem in seiner hinteren Endlage befindlichen Kolben angeordnet ist, wobei die Öffnung in einen Aufsatz mündet, der dazu bestimmt ist, eine für die Abgabe von Kautschuk adaptierte Nase aufzunehmen.

14. Maschine, die das Aufbringen kautschukartiger Produkte auf einen Luftreifenrohling im Zuge seiner Herstellung sichert, dadurch gekennzeichnet, daß sie aufweist:

— ein Portal, das einen demontierbaren steifen Kern, auf dem der Luftreifen aufgebaut wird, umfaßt,

— Einbringungs- und Ausbringungsmittel für den steifen Kern, ins Innere bzw. aus dem Inneren des Portals,

— Antriebsmittel, um den steifen Kern zu verdrehen,

— zumindest eine Aufbringungsvorrichtung für kautschukartige Produkte nach einem der Ansprüche 4 bis 13, die am Portal befestigt ist.

15. Maschine nach Anspruch 14, dadurch gekennzeichnet, daß sie pro Art aufzubringenden Kautschuks zumindest eine Vorrichtung umfaßt.

16. Maschine nach einem der Ansprüche 14 oder 15, dadurch gekennzeichnet, daß die Aufbringungsvorrichtungen auf dem Portal so angeordnet sind, daß mehrere von ihnen den Kautschuk simultan auf den Luftreifenrohling aufbringen können.

## Claims

1. A method of manufacturing a tire by successively, in the order required by the architecture of said tire, laying rubber products and reinforcement elements for progressively building the blank of the tire on a firm support, characterized by the fact that the laying of at least certain rubber products is effected by means of at least one volumetric extruder, the outlet orifice of which is positioned with respect to said support at the place where the rubber product is to be applied in order to build the blank, the amount of rubber product laid being controlled by the extrusion of a given volume by the volumetric extruder, in relation with the rotation of the said support and the radius of laying, the profile of the rubber product to be produced being obtained by a substantially meridian displacement of said orifice with respect to the rotation of said laying surface.

2. A method according to claim 1, including supporting the tire blank during the entire building thereof on a support which is a demountable rigid core defining the shape of the inner surface of the said tire.

3. A method according to claim, 2, characterized by the fact that the said core supports the tire during the subsequent vulcanization.

4. An apparatus for the laying of rubber products on a rotatable firm support on which a tire blank is built in the manufacture of a tire, comprising a volumetric extruder having an outlet opening, and means for delivering 8 given volume of rubber for a given radius and a given angle of rotation of the support a on which the tire blank is built, characterized by the fact that said outlet opening being an orifice of small dimensions, and by the fact that said apparatus comprises means adapted to provide a meridian relative movement of said orifice with respect to the surface on which the rubber is to be applied.

5. An apparatus according to claim 4, characterized by the fact that the said volumetric extruder is essentially formed of a conduit having a piston sliding within a bore of the conduit, and including a nozzle extending from the conduit toward the surface and terminating in such outlet opening.

6. An apparatus according to one of claim 4 or 5, characterized by the fact that it comprises a rotary roller behind said outlet opening for the application of the rubber on said rotary surface.

7. An apparatus according to claim 6, characterized by the fact that said roller has a degree of freedom of swing around an axis perpendicular to its axis of rotation.

8. An apparatus according to one of claims 4 to 7, characterized by the fact that means adapted to provide meridian relative movement comprise

— a pivotal axis around which the said volumetric extruder is arranged, the said axis being remote from said orifice and arranged with respect to said rotatable support in such a manner that said orifice describes around said axis a trajectory toward and away from said surface onto which the rubber is applied,
— means for pivoting the extruder about said axis,
— means for providing a transversal movement along said pivotal axis.

9. An apparatus according to one of claim 4 to 7, characterized by the fact that means adapted to provide meridian relative movement comprise
— a pivotal axis around which the said volumetric extruder is arranged, the said axis being remote from said orifice and arranged with respect to said rotatable support in such a manner that said orifice describes around said axis a trajectory toward and away from said surface onto which the rubber is applied,
— means for pivoting the extruder about said axis,
— means for providing a translation along an axis perpendicular to said pivotal axis.

10. An apparatus according to claim 8 or 9, characterized by the fact that is comprises means for pivotally orienting said orifice on itself.

11. An apparatus according to one of claim 5 to 10, characterized by the fact that said orifice is remote from the axis of the bore of said conduit.

12. An apparatus according to one of claim 5 to 11, characterized by the fact that the useful capacity of said conduit is greater than or equal to the volume of rubber product to be laid for the building of a tire.

13. An apparatus according to one of claim 5 to 12, characterized by the fact that said conduit includes a rubber feed opening in front of the piston when the latter is in its maximum rearward position, and a telescoping coupling for connecting said rubber feed opening with a source of supply of said rubber.

14. A machine for laying the rubber product on a tire blank, characterized by the fact that it comprises
— a gantry surrounding a demountable rigid core constituting the surface on which rubber is laid,
— means adapted for insertion and extraction of the core inside and outside said gantry,
— drive means adapted to rotate the core,
— at least an apparatus for the laying of rubber products according to one of claim 4 to 13, hooked on said gantry.

15. Machine according to claim 14, characterized by the fact that there is at least one said apparatus for each type of rubber to be laid.

16. Machine according to claim 14 or 15, characterized by the fact that said apparatus are arranged on said gantry so that several of them can operate simultaneously.

Fig. 1

Fig. 3

Fig. 2

EP 0 264 600 B1

D2    D3    D4    6

D1    1    12    D5

14    12    D6

56    5    55    D7

Fig. 4

EP 0 264 600 B1